# EUROPEAN PATENT SPECIFICATION

(11) **EP 2 233 276 B1**
(45) Date of publication and mention of the grant of the patent: **25.06.2014**
(21) Application number: 10153624.1
(22) Date of filing: 15.02.2010
(51) Int. Cl.: B29C 65/52, D06H 5/00

(54) **Cloth bonding apparatus**
Vorrichtung zum Verbinden vom Stoff
Appareil de liaison de tissus

(30) Priority: 25.03.2009 JP 2009074777
(43) Date of publication of application: 29.09.2010
(73) Proprietor: Brother Kogyo Kabushiki Kaisha, Nagoya-shi, Aichi 467-8561 (JP)
(72) Inventor: Yamaura, Hiroki, Nagoya-shi Aichi 467-8562 (JP); Umeda, Kazutoshi, Nagoya-shi Aichi 467-8562 (JP); Iwakoshi, Hiroyasu, Nagoya-shi Aichi 467-8562 (JP); Enya, Tetsuji, Nagoya-shi Aichi 467-8562 (JP); Tada, Satoru, Nagoya-shi Aichi 467-8562 (JP); Yoshimoto, Naoki, Nagoya-shi Aichi 467-8562 (JP); Ohmura, Yoshikazu, Nagoya-shi Aichi 467-8562 (JP)
(74) Representative: Oser, Andreas

(56) References cited:
- WO-A1-01/89812
- JP-A- 53 006 681
- US-A- 2 429 482
- US-A- 4 595 446

## Description

### BACKGROUND

The present invention relates to a cloth bonding apparatus. More specifically, the present invention relates to a cloth bonding apparatus that bonds cloths by applying an adhesive to one of the cloths and pressing the cloths together.

A bonding apparatus is directed for bonding cloths with an adhesive, instead of sewing the cloths with a needle and a thread. A known cloth bonding apparatus heats and melts an adhesive which is solid at ordinary temperature, and discharges the melted liquid adhesive from a nozzle to apply it onto a cloth. The cloth bonding apparatus presses and feeds the cloth, on which the adhesive has been applied, with another cloth by rollers, thereby bonding the cloths with each other. Since no thread is used for the cloths, the bonded cloths do not show unevenness. When such cloth bonding apparatus is used, the melted adhesive discharged from the nozzle may generate gas. Therefore, it may be desirable that the cloth bonding apparatus removes the gas in order to prevent a worker from inhaling the gas for a long time.

Japanese Patent Application Laid-Open Publication No. JP 1993-269336 discloses a collecting apparatus for collecting gaseous emission discharged from an adhesive container. Japanese Patent Application Laid-Open Publication No. JP 1996-252405 discloses a steam removing apparatus for removing steam generated from a melted material.

### SUMMARY

The apparatuses described in the aforementioned publications were complicated in their structures and are not able to remove the gas depending on a generation state of the gas. For this reason, the apparatuses described in the aforementioned publications are not able to efficiently remove gas generated from a melted adhesive.

JP-53-006681 A discloses a cloth bonding apparatus having a nozzle through which an adhesive is dischargeable onto a cloth; and a supplying portion adapted to supply the adhesive to the nozzle in response to an operation of worker.

WO 01/89812 A1 discloses another cloth bonding apparatus, US 2,429,482 discloses means for the production of foil material; and US 4, 595, 446 discloses an apparatus for solvent bonding surfaces of thermoplastic materials.

It is an object of the present invention to provide a cloth bonding apparatus that is capable of efficiently removing gas generated from an adhesive discharged from a nozzle.

A cloth bonding apparatus according to the present invention includes a nozzle, a supplying portion, a covering member, a blowing mechanism, a concentration detecting portion, and a blow controlling portion. An adhesive is dischargeable through the nozzle onto a cloth. The supplying portion is adapted to supply the adhesive to the nozzle in response to an operation of a worker. The covering member is adapted to prevent gas from directly flowing in a direction from the nozzle toward a worker side, which is a side of the cloth bonding apparatus at which the worker operates the cloth bonding apparatus. The blowing mechanism is adapted to blow air in a direction from the worker side toward the nozzle. The concentration detecting portion is adapted to detect a concentration of gas generated from the adhesive discharged from the nozzle. The blow controlling portion controls an operation of the blowing mechanism depending on a detection result of the concentration detecting portion.

With a simple structure such as the covering member, even when gas is generated from the adhesive, the cloth bonding apparatus can easily reduce an amount of the gas flowing toward the worker side. In addition, the cloth bonding apparatus can control the operation of the blowing mechanism depending on the concentration of the gas generated from the adhesive. Consequently, the cloth bonding apparatus can efficiently remove the gas depending on the gas concentration.

The cloth bonding apparatus according to the present invention may further include a suction mechanism adapted to draw in and exhaust the gas generated from the adhesive, and a suction controlling portion that controls an operation of the suction mechanism depending on the detection result of the concentration detecting portion.

In such a case, as both the blowing mechanism and the suction mechanism operate, the cloth bonding apparatus can remove the gas more reliably. In addition, as the cloth bonding apparatus can control the operation of the suction mechanism depending on the gas concentration, the cloth bonding apparatus can efficiently remove the gas.

In the cloth bonding apparatus according to the present invention, the supplying portion may stop supplying the adhesive to the nozzle in a case where the concentration of the gas detected by the concentration detecting portion is equal to or more than a predetermined value. In such a case, the cloth bonding apparatus can keep down the gas concentration.

The cloth bonding apparatus according to the present invention may further include an operation detecting portion that detects whether or not the blowing mechanism is operating, and the supplying portion may stop supplying the adhesive to the nozzle in a case where the operation detecting portion detects that the blowing mechanism is not operating. In such a case, no gas is generated when the blowing mechanism is not operating. Consequently, the cloth bonding apparatus can more reliably keep down the gas concentration.

In the cloth bonding apparatus according to the present invention, the blow controlling portion and the suction controlling portion may be capable of setting output power of the blowing mechanism and the suction mechanism, respectively, to one of at least two levels, which includes a high level and a low level. The blow controlling portion and the suction controlling portion may respectively set the output power of the blowing mechanism and the suction mechanism to the high level, in a case where the concentration of the gas detected by the concentration detecting portion is equal to or more than a first predetermined value. The blow controlling portion and the suction controlling portion may respectively set the output power of the blowing mechanism and the suction mechanism to the low level, in a case where the concentration of the gas detected by the concentration detecting portion is less than the first predetermined value. In other words, the cloth bonding apparatus may switch the output power of each of the blowing mechanism and the suction mechanism between the two levels.
In such a case, the cloth bonding apparatus can efficiently remove the gas in a simple processing.

In the cloth bonding apparatus according to the present invention, the supplying portion may stop supplying the adhesive to the nozzle in a case where the concentration of the gas detected by the concentration detecting portion is equal to or more than a second predetermined value, which is larger than the first predetermined value. In other words, the cloth bonding apparatus may stop supplying the adhesive in a case where the gas concentration is still high even after the output power of the blowing mechanism and the suction mechanism are set to the high level. In such a case, the cloth bonding apparatus can more reliably keep down the gas concentration.

### BRIEF DESCRIPTION OF THE DRAWINGS

Exemplary embodiments of the present disclosure will be described below in detail with reference to the accompanying drawings in which:
Fig. 1 is an upper front perspective view of a cloth bonding apparatus 1 according to a first embodiment;
Fig. 2 is a front view of the cloth bonding apparatus 1 according to the first embodiment;
Fig. 3 is a left side view of the cloth bonding apparatus 1 according to the first embodiment;
Fig. 4 is an upper front perspective view of an inner configuration of the cloth bonding apparatus 1;
Fig. 5 is a block diagram showing an electric configuration of the cloth bonding apparatus 1; and
Fig. 6 is a flowchart of a gas removal control processing performed by the cloth bonding apparatus 1.

### DETAILED DESCRIPTION OF EXEMPLARY EMBODIMENTS

A cloth bonding apparatus 1 according to the present invention will be described below with reference to the drawings.

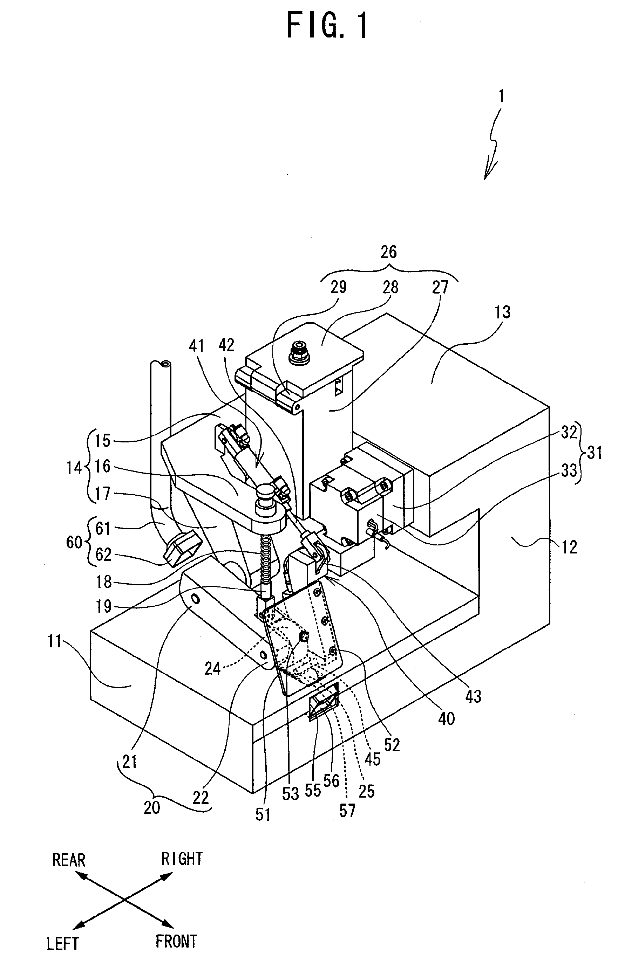

The configuration of the cloth bonding apparatus 1 will be described with reference to Figs. 1 to 3. In the following description, it is defined that the upper side, the lower side, the lower right side, the upper left side, the upper right side, and the lower left side of Fig. 1 are the upper side, the lower side, the front side, the rear side, the right side, and the left side of the cloth bonding apparatus 1, respectively.

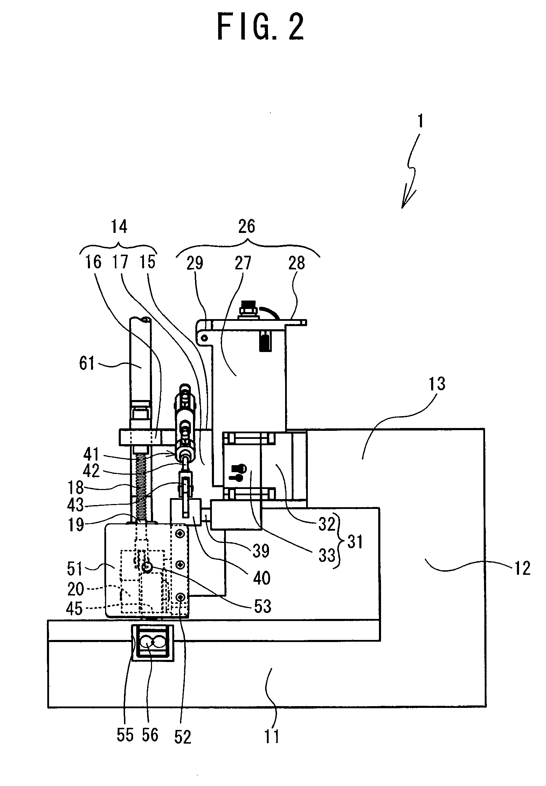

As shown in Figs. 1 and 2, the cloth bonding apparatus 1 includes a bed portion 11, a pillar portion 12 and an arm portion 13. The bed portion 11 has a substantially rectangular parallelepiped shape with the right-and-left direction as the longitudinal direction. The bed portion 11 is fixed on a table (not shown). The pillar portion 12 extends vertically upwards from the right end of the bed portion 11. The arm portion 13 is connected to the upper end of the pillar portion 12 and extends leftward from the left side of the pillar portion 12.

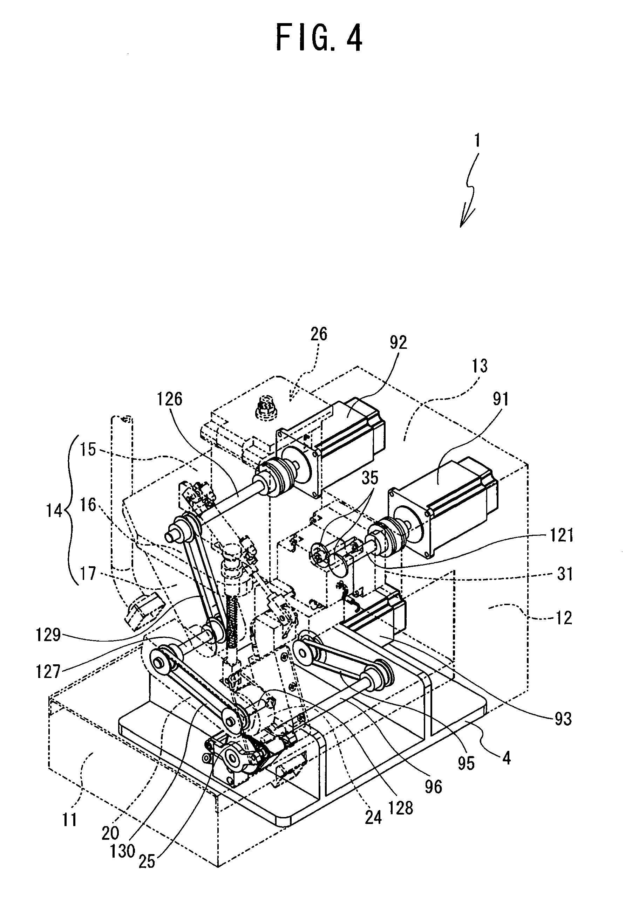

The bed portion 11 includes therein a lower feed roller 25, a third motor 93 (see Fig. 4) and the like. The lower feed roller 25 presses and feeds cloths in conjunction with an upper feed roller 24, which will be described later. The third motor 93 drives the lower feed roller 25. The bed portion 11 functions as a base that supports the pillar portion 12. The pillar portion 12 supports the arm portion 13. As shown in Fig. 1, the left end of the arm portion 13 supports a beam portion 14, a storage chamber 26 and a pump casing 31 from behind in this order. The arm portion 13 includes therein a first motor 91 (see Fig. 4), a second motor 92 (see Fig. 4) and the like. The first motor 91 drives a gear pump 35 (see Fig. 4). The second motor 92 drives the upper feed roller 24.

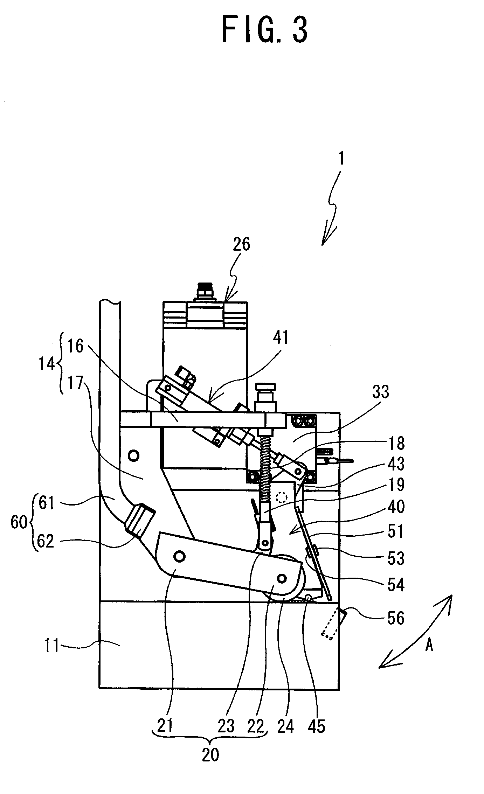

The beam portion 14, the storage chamber 26 and the pump casing 31 will be described below in order. The beam portion 14 and a roller holding portion 20 connected to the beam portion 14 will be described first. As shown in Fig. 1, the beam portion 14 includes a body portion 15, a spring support portion 16, and a column portion 17. The body portion 15 is a member extending horizontally leftward from the rear left end of the arm portion 13. The length of the body portion 15 in the right-and-left direction is about one third of the length of the bed portion 11 in the right-and-left direction. The spring support portion 16 has a plate shape and extends horizontally forward from the left end portion of the body portion 15. The length of the spring support portion 16 in the back-and-forth direction is about half the length of the bed portion 11 in the back-and-forth direction. As shown in Figs. 1 and 3, the column portion 17 extends obliquely downward from the body portion 15 at about 45 degrees relative to the horizontal plane. As shown in Fig. 3, there is a gap between the lower end of the column portion 17 and the bed portion 11.

As shown in Fig. 1, the spring support portion 16 has a hole at the front end portion. The spring support portion 16 supports a shaft portion 19 in a vertically movable manner. The shaft portion 19 is inserted through a spring 18. The upper end part of the shaft portion 19 is inserted into the hole of the spring support portion 16. The column portion 17 has a shaft portion extending horizontally leftward from the lower end part thereof. The shaft portion supports a rear end portion 21 of the roller holding portion 20. The roller holding portion 20 may swing a front end portion 22 in the vertical direction with the shaft portion as the center of swing. The body portion 15 is provided with an air cylinder 41 at the right side of the spring support portion 16. The air cylinder 41 is directed for moving the position of a support portion 40, which will be described later.

As shown in Fig. 3, the front end portion 22 of the roller holding portion 20 rotatably supports the upper feed roller 24. The upper feed roller 24 has a cylindrical shape. The upper feed roller 24 is positioned in the vicinity of the back of the nozzle 45. The nozzle 45 projects leftward from the support portion 40. The roller holding portion 20 has a support portion 23 on the upper face slightly forward from the center. The support portion 23 supports the lower end of the shaft portion 19 inserted through the spring 18. The spring 18 is interposed between the spring support portion 16 and the bottom portion of the shaft portion 19. The spring 18 urges the shaft portion 19 downward thereby urging the roller holding portion 20 connected to the shaft portion 19 downward.

The storage chamber 26 will be described below. As shown in Figs. 1 and 2, the storage chamber 26 has a substantially rectangular parallelepiped shape with the vertical direction as the longitudinal direction. The storage chamber 26 extends upward from the left side of the arm portion 13 and from the back of the pump casing 31. The storage chamber 26 includes a body portion 27, a cover portion 28, and a cover shaft portion 29. The body portion 27 has a bottomed tube shape having an opening at the top. The cover portion 28 covers the opening at the top of the body portion 27. The cover shaft portion 29 supports the cover portion 28 in an openable/closable manner. The storage chamber 26 stores an adhesive inside the body portion 27. The stored adhesive may be supplied from the storage chamber 26 to the gear pump 35 (see Fig. 4) and to the nozzle 45 as needed.

The pump casing 31 and the support portion 40 connected to the pump casing 31 will be described below. As shown in Figs. 1 and 2, the pump casing 31 includes a first pump casing 32 and a second pump casing 33. The first pump casing 32 is a substantially cubic member. The first pump casing 32 is fixed on the left side face of the arm portion 13 with four screws. The first pump casing 32 has a concave portion (not shown) at its left side. The first pump casing 32 includes the gear pump 35 (see Fig. 4) inside the concave portion. The gear pump 35 supplies an appropriate amount of the adhesive to the nozzle 45 with high accuracy. The second pump casing 33 is fixed to the left side face of the first pump casing 32 with four screws to cover the gear pump 35. The first pump casing 32 and the second pump casing 33 form a pump chamber. The gear pump 35 supplies the adhesive to the nozzle 45 in a pressurized manner.

As shown in Fig. 2, the second pump casing 33 includes a shaft portion 39 at the left side of its bottom. The shaft portion 39 swingably supports the support portion 40. The vertical length of the first pump casing 32 is substantially the same as that of the arm portion 13. The position of the second pump casing 33 in the right-and-left direction is substantially the same as the center position of the bed portion 11 in the right-and-left direction. Although not shown, the pump casing 31 includes two channels therein. A first channel leads the adhesive from the storage chamber 26 to the gear pump 35. A second channel leads the adhesive from the gear pump 35 to the support portion 40.

The shape of the support portion 40 is substantially rectangular parallelepiped with the vertical direction as the longitudinal direction. A small gap is present between the lower end of the support portion 40 and the bed portion 11. The support portion 40 includes a drive transmitting portion 43 at its upper end. The drive transmitting portion 43 supports an end of a movable portion 42 of the air cylinder 41. The support portion 40 swings back and forth (in the direction of arrow A in Fig. 3) with the shaft portion 39 as the center axis when the movable portion 42 of the air cylinder 41 moves back and forth.

As shown in Figs. 1 and 3, the nozzle 45 projects leftward from the lower end portion of the support portion 40. The nozzle 45 is cylindrical. When the movable portion 42 of the air cylinder 41 moves back and forth, the nozzle 45 moves to a position where the cloth bonding work is performed by a worker (hereinafter referred to as a use position) and to a position where maintenance is performed by the worker (hereinafter referred to as a maintenance position). The nozzle 45 has a discharge port (not shown) from which the adhesive is discharged. When the nozzle 45 is at the use position, the discharge port opposes the bed portion 11. When performing the bonding work, the worker inserts the nozzle 45 between two layers of oppositely arranged cloths. The gear pump 35 supplies the adhesive to the nozzle 45 through a channel (not shown) provided inside the support portion 40. The nozzle 45 discharges the adhesive from the discharge port onto the cloth. As a result, the adhesive may be applied on the surface of the lower cloth positioned below the nozzle 45.

As shown in Figs. 1 to 3, the cloth bonding apparatus 1 includes a plate-shaped covering member 51. The right end portion of the covering member 51 is fixed on the front face of the support portion 40 with three screws 52. The covering member 51 extends leftward from the support portion 40. One face of the covering member 51 opposes the nozzle 45. Therefore, the covering member 51 can prevent gas from directly flowing in a direction from the nozzle 45 toward a worker side. The worker side is a side of the cloth bonding apparatus 1 where the worker operates the cloth bonding apparatus 1. Therefore, the worker side may be varied depending on a structure of the cloth bonding apparatus 1. In the present embodiment, the worker side is the front side of the cloth bonding apparatus 1, more specifically, the front face side of the bed portion 11, where the worker inserts the nozzle 45 between the cloths, and feeds and bonds the cloths with the upper and lower feed rollers 24 and 25. The material of the covering member 51 is a transparent synthetic resin. Accordingly, the worker can visually confirm a cloth bonding process proceeding on the rear face side of the covering member 51 easily from the front face side of the covering member 51. The worker can remove the screws 52 off to detach the covering member 51. By doing so, the worker can easily perform cleaning of the cloth bonding apparatus 1, replacement of parts, and the like.

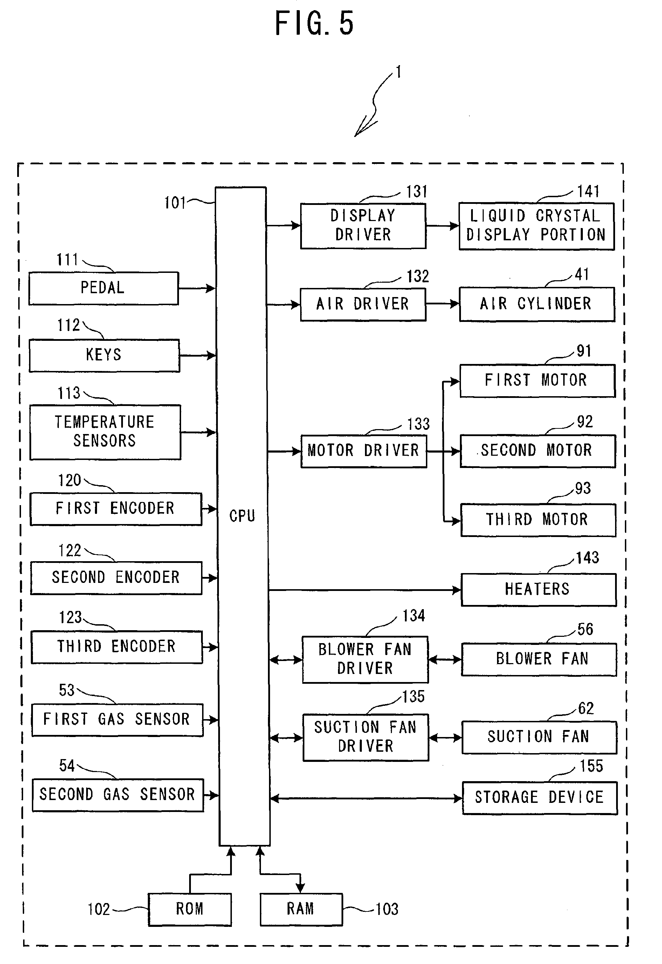

As shown in Figs. 1 and 2, the covering member 51 includes a first gas sensor 53 at the center of its front face. The first gas sensor 53 detects a concentration of gas generated from a melted adhesive. The first gas sensor 53 may be any known gas sensor. As shown in Fig. 3, the covering member 51 includes a second gas sensor 54 on the back side of the position where the first gas sensor 53 is installed, that is, on the rear face of the covering member 51. The second gas sensor 54 may be the same gas sensor as the first gas sensor 53. In general, when an adhesive which is solid at ordinary temperature is heated and melted, the adhesive may generate gas. The cloth bonding apparatus 1 detects a concentration of the gas on a side of the worker with the first gas sensor 53 and detects a concentration of the gas on a side of the nozzle 45 with the second gas sensor 54. The cloth bonding apparatus 1 accurately detects the concentrations of the gas on the front face side and rear face side of the covering member 51. Therefore, the cloth bonding apparatus 1 is able to perform more appropriate operations. The first gas sensor 53 and the second gas sensor 54 are electrically connected to a CPU 101 (see Fig. 5).

The cloth bonding apparatus 1 includes a blower fan 56 in the bed portion 11. As shown in Fig. 1, the bed portion 11 has an opening 57 in its upper face and an opening 55 in its front face. The opening 57 and the opening 55 are connected through a passage in the bed portion 11. The opening 57 is positioned below the upper feed roller 24 and behind the nozzle 45 at the use position. A part of the lower feed roller 25 (see Fig. 4) slightly projects upward from the opening 57. The opening 55 is positioned in the upper part of the front face of the bed portion 11. The position of the opening 55 in the right-and-left direction coincides with that of the opening 57. As shown in Fig. 3, the blower fan 56 is arranged in the opening 55 at such an angle as to face the nozzle 45 through the opening 57 obliquely from below and in front. The blower fan 56 takes air in from the front face side (worker side) of the bed portion 11. The blower fan 56 blows the air through the opening 57 in a direction toward the nozzle 45. Thus, the cloth bonding apparatus 1 can reduce an amount of the gas flowing toward the worker side with a simple structure even when the gas is generated from the melted adhesive.

The cloth bonding apparatus 1 includes a suction mechanism 60. The suction mechanism 60 includes a pipe 61 and a suction fan 62. As shown in Fig. 1, the pipe 61 is positioned behind and on the left side of the beam portion 14 and extends in the vertical direction. The lower portion of the pipe 61 is curved obliquely forward. An opening at the lower end of the pipe 61 faces in the direction of the nozzle 45.
The suction fan 62 is attached to the opening at the lower end of the pipe 61. The suction fan 62 draws in air and blows the air into the pipe 61. Thus, the cloth bonding apparatus 1 can rapidly exhaust the gas even when the gas is generated from the melted adhesive. As shown in Fig. 3, the suction fan 62 is oriented such that a direction in which the suction fan 62 draws in the air corresponds to a direction in which the blower fan 56 blows the air. This arrangement enables the cloth bonding apparatus 1 to efficiently remove the gas.

The inner configuration of the cloth bonding apparatus 1 will be described below with reference to Fig. 4. As shown in Fig. 4, the cloth bonding apparatus 1 includes therein the first motor 91, the second motor 92, the third motor 93, and the like. The first motor drives the gear pump 35. The second motor 92 drives the upper feed roller 24. The third motor 93 drives the lower feed roller 25.

The first motor 91 transmits a rotation drive force to the gear pump 35 via a rotary shaft 121 thereby driving the gear pump 35. The first motor 91 is positioned inside the arm portion 13 and to the right side of the portion where the pump casing 31 is connected to the arm portion 13. The rotary shaft 121 extends inside the pump casing 31 leftward from the rotary shaft of the first motor 91. The gear pump 35 supplies an appropriate amount of the adhesive to the nozzle 45 (see Figs. 1 to 3).

The second motor 92 transmits a rotation drive force to the upper feed roller 24 via rotary shafts 126, 127, 128 and belts 129, 130 thereby driving the upper feed roller 24. The second motor 92 is positioned inside the arm portion 13 and to the right side of the portion where the beam portion 14 is connected with the arm portion 13. The rotary shaft 126 extends leftward from the rotary shaft of the second motor 92 and extends through the body portion 15. The left end of the rotary shaft 126 is positioned inside the column portion 17. The left end of the rotary shaft 126 supports a pulley. The right end of the rotary shaft 127 is positioned inside the lower end of the column portion 17 and the left end of the rotary shaft 127 is positioned inside the rear end portion 21 of the roller holding portion 20. The right end and left end of the rotary shaft 127 each support a pulley.

The rotary shaft 128 is a rotary shaft of the upper feed roller 24. The left end of the rotary shaft 128 is positioned inside the front end portion 22 of the roller holding portion 20 and supports a pulley. The right end of the rotary shaft 128 projects from the front end portion 22 and supports the upper feed roller 24. The belt 129 is crossed between the pulley at the left end of the rotary shaft 126 and the pulley at the right end of the rotary shaft 127 inside the column portion 17. The belt 130 is crossed between the pulley at the left end of the rotary shaft 127 and the pulley at the left end of the rotary shaft 128 inside the roller holding portion 20. The upper feed roller 24 rotates along with the rotation of the second motor 92.

The third motor 93 transmits a rotation drive force to the lower feed roller 25 via a rotary shaft 96 and a belt 95 thereby driving the lower feed roller 25. The third motor 93 is positioned inside the right end portion of the bed portion 11. The lower feed roller 25 is cylindrical and is fixed to the rotary shaft 96. The lower feed roller 25 is positioned below the upper feed roller 24 and inside the bed portion 11. The bed portion 11 has a support portion 4 therein. The support portion 4 rotatably supports the rotary shaft 96. The belt 95 is crossed between a pulley of a rotary shaft of the third motor 93 and a pulley at the right end of the rotary shaft 96 inside the bed portion 11. The lower feed roller 25 rotates along with the rotation of the third motor 93. The upper feed roller 24 and the lower feed roller 25 rotate to press cloths sandwiched therebetween and to feed the cloths in the feeding direction from front to back.

An electrical configuration of the cloth bonding apparatus 1 will be described with reference to Fig. 5. As shown in Fig. 5, the cloth bonding apparatus 1 includes the CPU 101, a ROM 102, a RAM 103, and a storage device 155. The CPU 101 receives input information and detection information to execute control processing and the like. The input information is information inputted via the input device, such as keys 112, which will be described later. The detection information is information detected by various sensors, encoders, and the like. The control processing is directed for controlling various motors, the blower fan 56, the suction fan 62, and the like.
The ROM 102 stores programs to be executed by the CPU 101, various initial setting parameters and the like. The RAM 103 temporarily stores a timer, a counter, a flag, and the like. The storage device 155 stores various items of setting information inputted by the worker. The CPU 101 is electrically connected with the ROM 102, the RAM 103 and the storage device 155, respectively. The CPU 101 can access storage areas of the ROM 102, the RAM 103 and the storage device 155, respectively.

A pedal 111, the keys 112, and temperature sensors 113 are electrically connected with the CPU 101, respectively. The pedal 111 is provided at a lower position of the table (not shown) on which the cloth bonding apparatus 1 is mounted. The worker may operate the pedal 111 with a foot. The CPU 101 recognizes an amount by which the pedal 111 is pressed down by the foot of the worker. The CPU 10 1 determines rotation speeds of the upper feed roller 24 and the lower feed roller 25 on the basis of the recognized pressed amount of the pedal 111. The keys 112 are mounted on the table. The CPU 101 recognizes a pressed state of any of the keys 112 operated by the worker. The CPU 101 performs various processing on the basis of the recognized pressed state of the keys 112. The temperature sensors 113 are respectively provided in the storage chamber 26, the pump casing 31, and the support portion 40. By recognizing the temperatures respectively detected by the temperature sensors 113, the CPU 101 recognizes the respective temperatures of the adhesive flowing inside the storage chamber 26, the pump casing 31, and the support portion 40.

A first encoder 120, a second encoder 122, and a third encoder 123 are electrically connected with the CPU 101, respectively. The first encoder 120 detects a rotation amount of the first motor 91. The second encoder 122 detects a rotation amount of the second motor 92. The third encoder 123 detects a rotation amount of the third motor 93. By recognizing the information on the rotation amounts respectively detected by the encoders 120, 122, and 123, the CPU 101 recognizes actual rotation speeds of the first to third motors 91 to 93.

The first gas sensor 53 and the second gas sensor 54 are each connected to the CPU 101. As described above, the first gas sensor 53 detects the concentration of the gas on the front face side of the covering member 51. The second gas sensor 54 detects the concentration of the gas on the rear face side of the covering member 51. The CPU 101 recognizes the concentrations of the gas detected by the first gas sensor 53 and the second gas sensor 54. The CPU 101 controls the operations of the blower fan 56 and the suction fan 62 depending on the recognized gas concentrations. The CPU 101 can also stop discharging the adhesive from the nozzle 45 when the gas concentration reaches a predetermined value or becomes larger. Detailed processing will be described later.

A display driver 131 is electrically connected to the CPU 101. A liquid crystal display (LCD) portion 141 is electrically connected to the display driver 131. The CPU 101 displays desired information on the LCD portion 141 via the display driver 131. The LCD portion 141 is mounted on the table, and displays information on settings input by the worker, and the like. An air driver 132 is electrically connected to the CPU 101. The air cylinder 41 is electrically connected to the air driver 132. The CPU 101 controls a pressure of the air to be fed into the air cylinder 41 via the air driver 132. The CPU 101 drives the air cylinder 41 in response to an operation of the worker to move the support portion 40 to the use position or to the maintenance position.

A motor driver 133 is electrically connected to the CPU 101. The first to third motors 91 to 93 each are electrically connected to the motor driver 133. The CPU 101 controls the first to third motors 91 to 93 to be rotated at desired rotation speeds via the motor driver 133. Heaters 143 are each electrically connected to the CPU 101. The heaters 143 are respectively provided in the storage chamber 26, the pump casing 31, and the support portion 40. The CPU 101 controls ON/OFF of the respective heaters 143 based on the temperatures detected by the temperature sensors 113 to adjust the temperatures of the adhesive in the respective portions to desired temperatures.

A blower fan driver 134 and a suction fan driver 135 are each connected to the CPU 101. The blower fan driver 134 is connected to the blower fan 56. The CPU 101 controls operations of a motor of the blower fan 56 via the blower fan driver 134. The blower fan driver 134 transmits a signal indicative of an operation state of the blower fan 56 to the CPU 101. The suction fan driver 135 is connected with the suction fan 62. The CPU 101 controls operations of a motor of the suction fan 62 via the suction fan driver 135. The suction fan driver 135 transmits a signal indicative of an operation state of the suction fan 62 to the CPU 101. The CPU 101 controls the operations of the blower fan 56 and the suction fan 62 depending on the gas concentrations detected by the first gas sensor 53 and the second gas sensor 54, and on the operation states of the blower fan 56 and the suction fan 62 (whether or not the fans are normally operating).

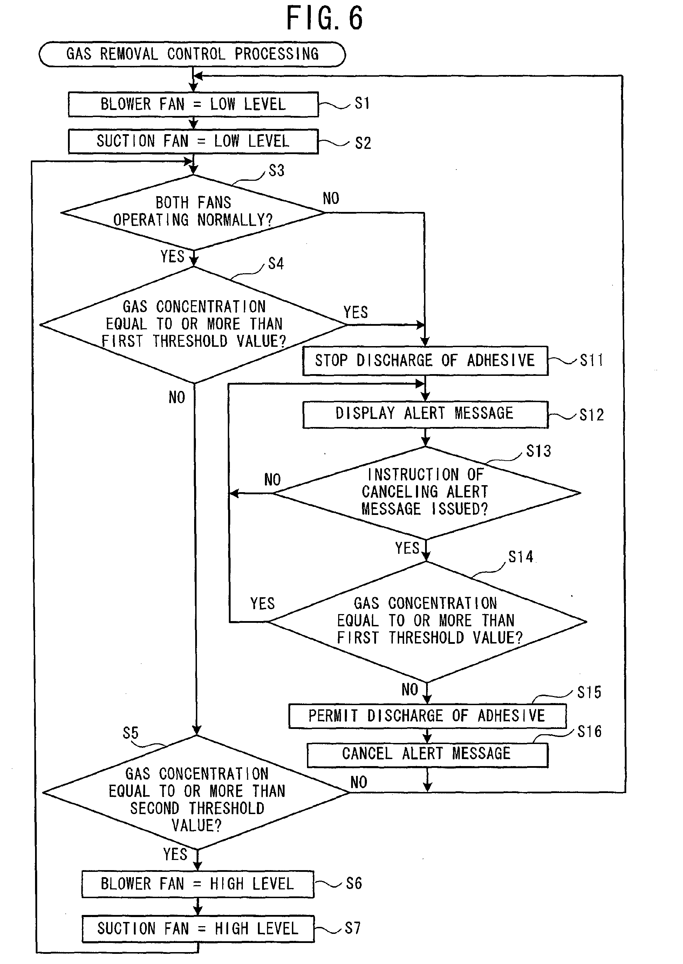

A gas removal control processing performed in the cloth bonding apparatus 1 will be described with reference to Fig. 6. The gas removal control processing is directed for controlling the operations of the blower fan 56 and the suction fan 62 and for stopping or permitting the discharge of the adhesive depending on the gas concentrations. When the worker turns on the power supply of the cloth bonding apparatus 1, the CPU 101 executes the gas removal control processing according to a program stored in the ROM 102.

As shown in Fig. 6, the CPU 101 sets output power of the blower fan 56 to a low level and drives the blower fan 56 (S1). The CPU 101 sets output power of the suction fan 62 to the low level and drives the suction fan 62 (S2). The CPU 101 receives the signals on the operation states from each of the blower fan driver 134 and the suction fan driver 135. The CPU 101 determines, on the basis of the received signals, whether the operations of the blower fan 56 and the suction fan 62 are both normal (whether the both fans are operating normally) (S3). If the operations of the blower fan 56 and the suction fan 62 are both normal (S3: YES), the CPU 101 determines whether at least one of the gas concentrations, that is, the gas concentration detected by the first gas sensor 53 (hereinafter referred to as a first concentration) and the gas concentration detected by the second gas sensor 54 (hereinafter referred to as a second concentration) is equal to or more than a first threshold value (S4). The first threshold value is larger than a second threshold value described later. The first threshold value is used to determine whether the discharge of the adhesive from the nozzle 45 should be stopped.

If the first concentration and the second concentration are both less than the first threshold value (S4: NO), the CPU 101 determines whether at least one of the first concentration and the second concentration is equal to or more than the second threshold value (S5). The second threshold value is used to determine the output power, more specifically, whether the output power should be set to the low level or to a high level.

If the first concentration and the second concentration are both lower than the second threshold value (S5: NO), the CPU 101 returns to the processing in step S1. The CPU 101 maintains the output power of the blower fan 56 and the suction fan 62 both at the low level. If the gas concentration increases and at least one of the first concentration and the second concentration becomes equal to or more than the second threshold value, but is still lower than the first threshold value (S5: YES), the CPU 101 sets the output power of the blower fan 56 to the high level (S6) and the output power of the suction fan to the high level (S7). The CPU 101 returns to the processing in step S3. When the gas concentration decreases and both the first concentration and the second concentration have become lower than the second threshold value (S5: NO), the CPU 101 returns both the output power of the blower fan 56 and the suction fan 62 to the low level (S1, S2). Thus, the cloth bonding apparatus 1 switches the output power of the blower fan 56 and the suction fan 62 between the high level and the low level, with the second threshold value as a reference. Therefore, the cloth bonding apparatus 1 can efficiently remove the gas in a simple processing.

If the operation of at least one of the blower fan 56 and the suction fan 62 is not normal (S3: NO), or if at least one of the first concentration and the second concentration is equal to or more than the first threshold value (S4: YES), the CPU 101 stops discharging the adhesive (S11). Specifically, the CPU 101 stops the first motor 91 to stop driving the gear pump 35. Consequently, the discharge of the adhesive from the nozzle 45 is stopped. In such a way, the cloth bonding apparatus 1 stops supplying the adhesive in a case where the gas concentration is still high even after the output power of the blowing fan 56 and the suction fan 62 are set to the high level. Thus, the cloth bonding apparatus 1 can more reliably keep down the gas concentration. The CPU 101 causes the LCD portion 141 to display an alert message indicating that the gas concentration is high (S12). The CPU 101 determines whether an instruction of canceling the alert message has been issued (Sl3). If the instruction has not been issued (S13: NO), the CPU 101 continues to output the alert message while the discharge of the adhesive is stopped (S12).

If the worker operates the keys 112 and inputs the instruction of canceling the alert message (S 13: YES), the CPU 101 determines again whether at least one of the first concentration and the second concentration is equal to or more than the first threshold value (S 14). If at least one of the first concentration and the second concentration is equal to or more than the first threshold value (S14: YES), the CPU 101 returns to the processing in step S12 and continues to output the alert message. If the first concentration and the second concentration are both lower than the first threshold value (S 14: NO), the CPU 101 cancels off the stop of the discharge of the adhesive and permits it (S 15). Specifically, the CPU 101 drives the first motor 91. The CPU 101 erases the alert message displayed on the LCD portion 141 and cancels the alert (S16), and then returns to the processing in step S 1. Note that the output power of the blower fan 56 and the suction fan 62 at the low level is lower than the output power of those at the high level in blowing force and suction force.

As described above, the cloth bonding apparatus 1 according to the present embodiment includes the covering member 51. The covering member 51 prevents the gas from directly flowing in the direction from the nozzle 45 toward the worker side. Therefore, even when gas is generated from the adhesive, the cloth bonding apparatus 1 can easily reduce the amount of the gas flowing in the direction toward the worker side with the simple structure. The cloth bonding apparatus 1 includes the blower fan 56 that blows the air in the direction from the worker side toward the nozzle 45. The cloth bonding apparatus 1 can control the operation of the blower fan 56 depending on the concentration of the gas generated from the adhesive. This enables the cloth bonding apparatus 1 to efficiently remove the gas depending on the gas concentration. The cloth bonding apparatus 1 further includes the suction mechanism 60 that draws in and exhausts the gas. Therefore, the cloth bonding apparatus 1 can remove the gas more reliably. The cloth bonding apparatus 1 can control the operation of the suction mechanism 60 depending on the gas concentration. Accordingly, the cloth bonding apparatus 1 can remove the gas more efficiently.

The cloth bonding apparatus 1 stops discharging the adhesive from the nozzle 45 in a case where the detected gas concentration is equal to or more than the first threshold value. By doing this, the cloth bonding apparatus 1 can reduce the gas concentration. The cloth bonding apparatus 1 stops discharging the adhesive from the nozzle 45 in a case where the blower fan 56 is not operating normally. As a result, when the blower fan 56 is not operating normally, no gas is generated. Accordingly, the cloth bonding apparatus 1 can more reliably keep down the gas concentration.

In the above embodiment, the gear pump 35, the first motor 91 and the CPU 101 correspond to the "supplying portion" of the present invention. The blower fan 56 corresponds to the "blowing mechanism". The first gas sensor 53 and the second gas sensor 54 correspond to the "concentration detecting portion". The CPU 101 that executes steps S1 and S6 in Fig. 6 functions as the "blow controlling portion".

The suction mechanism 60 corresponds to the "suction mechanism" of the present invention. The CPU 101 that executes steps S2 and S7 in Fig. 6 functions as the "suction controlling portion". The CPU 101 that determines whether the blower fan 56 is normally operating in step S3 in Fig. 6 functions as the "operation detecting portion". The second threshold value used by the CPU 101 to determine either one of the low level and the high level to be set for the output power corresponds to the "first predetermined value". The first threshold value used by the CPU 101 to determine whether to stop discharging the adhesive corresponds to the "second predetermined value".

The structures and processing shown in the above embodiment are exemplary and may be variously modified within the scope of the appended claims. For example, the covering member 51 of the above embodiment is fixed on the support portion 40 with the screws 52. However, the structure of the covering member 51 can be appropriately modified. For example, the covering member 51 may be integrally formed with the support portion 40. When integrally formed with the support portion 40, the covering member 51 can reliably reduce the possibility that the gas flows toward the worker side.

The cloth bonding apparatus 1 may detect whether the covering member 51 is normally attached on the support portion 40. When the covering member 51 is not normally attached thereon, the cloth bonding apparatus 1 may stop discharging the adhesive. For example, the support portion 40 may have a groove and the covering member 51 may have a conductive pin to be inserted into the groove. A current flows only when the pin is inserted into the groove, that is, only when the covering member 51 is attached to the support portion 40. The CPU 101 determines whether the current is flowing or not. The CPU 101 stops discharging the adhesive if the current is not flowing. Alternatively, the cloth bonding apparatus 1 may detect an attachment state of the covering member 51 with a micro switch or the like provided in the support portion 40.

The shape of the covering member 51 may be changed. For example, the covering member may have a box shape having a space for accommodating gas. The box-shaped covering member may be arranged to surround and cover the nozzle 45 from above. In such a case, the covering member can collect gas if the specific gravity of the gas generated from the adhesive relative to the air is small. Accordingly, the covering member can reduce the possibility that the gas flows toward the worker side. The covering member can further efficiently remove the gas if an opening is provided to the upper portion of the covering member and the end of the pipe 61 of the suction mechanism 60 is connected to the opening.

The method of controlling the blower fan 56 and the suction fan 62 can be changed. It may be desirable that the blower fan 56 and the suction fan 62 are always operating normally so that the gas can be removed more reliably. However, for example, the blower fan 56 may operate when the power supply of the cloth bonding apparatus 1 is turned on, and the suction fan 62 may operate together with the blower fan 56 after the gas concentration reaches the predetermined value or becomes larger. In the above embodiment, the output power of the blower fan 56 and the suction fan 62 can be set to either of the two levels, that is, the low level and the high level. However, there may be more levels of the output power and more threshold values of the gas concentration for determining the level of the output power. The timings for changing the output power of the blower fan 56 and the suction fan 62 may be different from each other.

The threshold value of the gas concentration for determining the output power of the blower fan 56 and the suction fan 62 and the threshold value of the gas concentration for determining whether to stop discharging the adhesive may be separately set depending on the respective detection results of the first gas sensor 53 and the second gas sensor 54. Typically, the gas concentration detected by the first gas sensor 53 may be lower than the concentration detected by the second gas sensor 54 on the rear side of the covering member 51. Thus, the threshold value corresponding to the first gas sensor 53 may be set to be lower than the threshold value corresponding to the second gas sensor 54. In such a case, the operations of the cloth bonding apparatus 1 may be controlled more appropriately. The number of gas sensors is not limited to two. For example, the covering member 51 may include only the first gas sensor 53 arranged on the side of the worker (front face side). The arrangement positions of the gas sensors may be appropriately varied.

The structure of the suction mechanism 60 may be modified. For example, a suction apparatus may be arranged outside the cloth bonding apparatus 1. In such a case, the suction apparatus may include a pipe and the pipe may be arranged in the vicinity of the nozzle 45. A single suction apparatus may suction gas from a plurality of cloth bonding apparatuses 1. The cloth bonding apparatus 1 may not include a suction mechanism. In other words, the cloth bonding apparatus 1 may include only the blower fan 56.

In step S11 of the gas removal control processing shown in Fig. 6, the CPU 101 may stop the second motor 92 and the third motor 93 at the same time. Then, in step S 15, the CPU 101 may drive the second motor 92 and the third motor 93 at the same time.

## Claims

1. A cloth bonding apparatus (1) comprising:
a nozzle (45) through which an adhesive is dischargeable onto a cloth;
a supplying portion (35, 91, 101) adapted to supply the adhesive to the nozzle (45) in response to an operation of a worker,
**characterized in that** the cloth bonding apparatus (1) further comprises:
a covering member (51) adapted to prevent gas from directly flowing in a direction from the nozzle (45) toward a worker side, the worker side being a side of the cloth bonding apparatus (1) at which the worker operates the cloth bonding apparatus (1);
a blowing mechanism (56) adapted to blow air in a direction from the worker side toward the nozzle (45);
a concentration detecting portion (53, 54) adapted to detect a concentration of gas generated from the adhesive discharged from the nozzle (45); and
a blow controlling portion (101) that controls an operation of the blowing mechanism (56) depending on a detection result of the concentration detecting portion (53, 54).

2. The cloth bonding apparatus (1) according to claim 1, further comprising:
a suction mechanism (60) adapted to draw in and exhaust the gas generated from the adhesive; and
a suction controlling portion (101) that controls an operation of the suction mechanism (60) depending on the detection result of the concentration detecting portion (53, 54).

3. The cloth bonding apparatus (1) according to claim 1 or 2, wherein the supplying portion (35, 91, 101) stops supplying the adhesive to the nozzle (45) in a case where the concentration of the gas detected by the concentration detecting portion (53, 54) is equal to or more than a predetermined value.

4. The cloth bonding apparatus (1) according to any one of claims 1 to 3, further comprising an operation detecting portion (101) that detects whether or not the blowing mechanism (56) is operating,
wherein the supplying portion (35, 91, 101) stops supplying the adhesive to the nozzle (45) in a case where the operation detecting portion (101) detects that the blowing mechanism (56) is not operating.

5. The cloth bonding apparatus according to any one of claims 2 to 4, wherein:
the blow controlling portion (101) and the suction controlling portion (101) are capable of setting output power of the blowing mechanism (56) and the suction mechanism (60), respectively, to one of at least two levels, the at least two levels including a high level and a low level;
the blow controlling portion (101) and the suction controlling portion (101) respectively set the output power of the blowing mechanism (56) and the suction mechanism (60) to the high level, in a case where the concentration of the gas detected by the concentration detecting portion (101) is equal to or more than a first predetermined value; and
the blow controlling portion (101) and the suction controlling portion (101) respectively set the output power of the blowing mechanism (56) and the suction mechanism (60) to the low level, in a case where the concentration of the gas detected by the concentration detecting portion (101) is less than the first predetermined value.

6. The cloth bonding apparatus (1) according to claim 5, wherein the supplying portion (35, 91, 101) stops supplying the adhesive to the nozzle (45) in a case where the concentration of the gas detected by the concentration detecting portion (53, 54) is equal to or more than a second predetermined value, the second predetermined value being larger than the first predetermined value.

## Patentansprüche

1. Tuchfügegerät (1) mit:
einer Düse (45), durch die ein Klebemittel auf ein Tuch ausgelassen werden kann;
einem Zuführabschnitt (35, 91, 101), der daran angepasst ist, das Klebemittel zu der Düse (45) als Reaktion auf eine Betätigung eines Benutzers zuzuführen,
**dadurch gekennzeichnet, dass** das Tuchfügegerät (1) des Weiteren Folgendes aufweist:
ein Abdeckungselement (51), das daran angepasst ist, zu vermeiden, dass ein Gas in einer Richtung von der Düse (45) direkt zur Seite des Benutzers strömt, wobei die Seite des Benutzers eine Seite des Tuchfügegerätes (1) ist, an der der Benutzer das Tuchfügegerät (1) betätigt;
einen Gebläsemechanismus (56), der daran angepasst ist, Luft in einer Richtung von der Seite des Benutzers zu der Düse (45) zu blasen;
einen Konzentrationserfassungsabschnitt (53, 54), der daran angepasst ist, eine Gaskonzentration zu erfassen, die durch das Klebemittel erzeugt wird, das von der Düse (45) ausgelassen ist;
einen Gebläsesteuerabschnitt (101), der einen Betrieb des Gebläsemechanismus (56) in Abhängigkeit von einem Erfassungsergebnis des Konzentrationserfassungsabschnitts (53, 54) steuert.

2. Tuchfügegerät (1) gemäß Anspruch 1, des Weiteren mit:
einem Saugmechanismus (60), der daran angepasst ist, dass durch das Klebemittel erzeugte Gas einzuziehen und auszulassen; und
einem Saugsteuerabschnitt (101), der einen Betrieb des Saugmechanismus (60) in Abhängigkeit des Erfassungsergebnis von dem Konzentrationserfassungsabschnitt (53, 54) steuert.

3. Tuchfügegerät (1) gemäß Anspruch 1 oder 2, wobei der Zuführabschnitt (35, 91, 101) die Zufuhr des Klebemittels zu der Düse (45) stoppt, falls die Konzentration des Gases, die durch den Konzentrationserfassungsabschnitt (53, 54) erfasst ist, gleich oder größer ist als ein vorbestimmter Wert.

4. Tuchfügegerät (1) gemäß einem der Ansprüche 1 bis 3, des Weiteren mit einem Betriebserfassungsabschnitt (101), der erfasst, ob der Gebläsemechanismus (56) in Betrieb ist oder nicht,
wobei der Zuführabschnitt (35, 91, 101) die Zufuhr des Klebemittels zu der Düse (45) stoppt, falls der Betriebserfassungsabschnitt (101) erfasst, dass der Gebläsemechanismus (56) nicht in Betrieb ist.

5. Tuchfügegerät gemäß einem der Ansprüche 2 bis 4, wobei:
der Gebläsesteuerabschnitt (101) und der Saugsteuerabschnitt (101) eine Abgabeleistung des Gebläsemechanismus (56) und des Saugmechanismus (60) jeweils auf ein von mindestens zwei Niveaus festlegen können, wobei die mindestens zwei Niveaus ein hohes Niveau und ein niedriges Niveau beinhalten;
der Gebläsesteuerabschnitt (101) und der Saugsteuerabschnitt (101) die Abgabeleistung des Gebläsemechanismus (56) und des Saugmechanismus (60) jeweils auf das hohe Niveau festlegen, falls die Konzentration des Gases, die durch den Konzentrationserfassungsabschnitt (101) erfasst ist, gleich oder größer ist als ein erster vorbestimmter Wert; und
der Gebläsesteuerabschnitt (101) und der Saugsteuerabschnitt (101) die Abgabeleistung des Gebläsemechanismus (56) und des Saugmechanismus (60) jeweils auf das niedrige Niveau festlegen, falls die Konzentration des Gases, die durch den Konzentrationserfassungsabschnitt (101) erfasst ist, kleiner ist als der vorbestimmte Wert.

6. Tuchfügegerät (1) gemäß Anspruch 5, wobei der Zuführabschnitt (35, 91, 101) die Zufuhr des Klebemittels zu der Düse (45) stoppt, falls die Konzentration des Gases, die durch den Konzentrationserfassungsabschnitt (53, 54) erfasst ist, gleich oder größer ist als ein zweiter vorbestimmter Wert, wobei der zweite vorbestimmte Wert größer ist als der erste vorbestimmte Wert.

## Revendications

1. Dispositif de collage de tissu (1) comprenant :
un injecteur (45) à travers lequel un adhésif peut être distribué sur un tissu ;
une partie d'alimentation (35, 91, 101) adaptée de manière à délivrer l'adhésif à l'injecteur (45) en réponse à une commande d'un opérateur,
**caractérisé en ce que** le dispositif de soudage de tissu (1) comprend, en outre :
un élément de recouvrement (51) adapté de manière à empêcher le gaz de circuler directement suivant une direction orientée depuis l'injecteur (45) vers le côté opérateur, le côté opérateur étant un côté du dispositif de soudage de tissu (1) au niveau duquel l'opérateur commande le dispositif de soudage de tissu (1) ;
un mécanisme de soufflage (56) adapté de manière à souffler de l'air suivant une direction orientée depuis le côté opérateur vers l'injecteur (45) ;
une partie de détection de concentration (53, 54) adaptée de manière à détecter une concentration de gaz dégagé par l'adhésif distribué à partir de l'injecteur (45) ; et
une partie de commande de soufflage (101) qui commande une activation du mécanisme de soufflage (56) en fonction d'un résultat de détection de la partie de détection de concentration (53, 54).

2. Dispositif de collage de tissu (1) selon la revendication 1, comprenant, en outre :
un mécanisme d'aspiration (60) adapté de manière à aspirer et extraire le gaz dégagé par l'adhésif ; et
une partie de commande d'aspiration (101) qui commande le fonctionnement du mécanisme d'aspiration (60) en fonction du résultat de détection de la partie de détection de concentration (53, 54).

3. Dispositif de collage de tissu (1) selon la revendication 1 ou 2, dans lequel la partie d'alimentation (35, 91, 101) arrête l'alimentation de l'adhésif vers l'injecteur (45) dans un cas dans lequel la concentration du gaz détectée par la partie de détection de concentration (53, 54) est supérieure ou égale à une valeur prédéterminée.

4. Dispositif de collage de tissu (1) selon l'une quelconque des revendications 1 à 3, comprenant, en outre, une partie de détection de fonctionnement (101) qui détecte si le mécanisme de soufflage (56) fonctionne ou non,
dans lequel la partie d'alimentation (35, 91, 101) arrête l'alimentation de l'adhésif vers l'injecteur (45) dans un cas dans lequel la partie de détection de fonctionnement (101) détecte que le mécanisme de soufflage (56) ne fonctionne pas.

5. Dispositif de collage de tissu selon l'une quelconque des revendications 2 à 4, dans lequel :
la partie de commande de soufflage (101) et la partie de commande d'aspiration (101) permettent de positionner la puissance de sortie respectivement du mécanisme de soufflage (56) et du mécanisme d'aspiration (60) sur l'un d'au moins deux niveaux, les au moins deux niveaux comportant un niveau haut et un niveau bas ;
la partie de commande de soufflage (101) et la partie de commande d'aspiration (101) positionnent la puissance de sortie respectivement du mécanisme de soufflage (56) et du mécanisme d'aspiration (60) au niveau haut, dans un cas dans lequel la concentration du gaz détectée par la partie de détection de concentration (101) est supérieure ou égale à une première valeur prédéterminée ; et
la partie de commande de soufflage (101) et la partie de commande d'aspiration (101) positionnent la puissance de sortie respectivement du mécanisme de soufflage (56) et du mécanisme d'aspiration (60) au niveau bas, dans un cas dans lequel la concentration du gaz détectée par la partie de détection de concentration (101) est inférieure à une première valeur prédéterminée.

6. Dispositif de collage de tissu (1) selon la revendication 5, dans lequel la partie d'alimentation (35, 91, 101) arrête l'alimentation de l'adhésif vers l'injecteur (45) dans un cas dans lequel la concentration du gaz détectée par la partie de détection de concentration (53, 54) est supérieure ou égale à une seconde valeur prédéterminée, la seconde valeur prédéterminée étant supérieure à la première valeur prédéterminée.
